# EUROPÄISCHE PATENTSCHRIFT

(11) **EP 1 715 143 B1**
(45) Veröffentlichungstag und Bekanntmachung des Hinweises auf die Patenterteilung: **20.06.2012**
(21) Anmeldenummer: 06003222.4
(22) Anmeldetag: 17.02.2006
(51) Int. Cl.: F01L 1/352

(54) **Linearspannsystem**
Camshaft phasing device for an internal combustion engine
Déphaseur d'arbre à cames de moteur à combustion interne

(30) Priorität: 23.04.2005 DE 102005018956
(43) Veröffentlichungstag der Anmeldung: 25.10.2006
(73) Patentinhaber: Schaeffler Technologies AG & Co. KG, 91074 Herzogenaurach (DE)
(72) Erfinder: Schäfer, Jens, Dipl.-Ing., 91074 Herzogenaurach (DE); Heywood, Jonathan, Dipl.-Ing., 96175 Pettstadt (DE); Steigerwald, Martin, Dipl.-Ing., 91056 Erlangen (DE)

(56) Entgegenhaltungen:
- EP-A- 1 178 185
- WO-A-95/00748
- WO-A-2005/080757
- DE-A1- 10 315 151
- US-A- 5 327 859
- US-A1- 2003 037 740

## Beschreibung

### Gebiet der Erfindung

Die Erfindung betrifft eine Vorrichtung zur elektrischen Verstellung der relativen Drehwinkellage zwischen einer Nockenwelle und einer Kurbelwelle einer Brennkraftmaschine, mit einem Verstellgetriebe, das ein kurbelwellenfestes Antriebsteil, ein nockenwellenfestes Abtriebsteil und eine mit einer Verstelleinheitswelle einer elektrischen Verstelleinheit drehfest verbundene Verstellwelle aufweist.

### Hintergrund der Erfindung

Zur relativen Verstellung der Winkelstellung zwischen der Kurbelwelle und der Nockenwelle eines Verbrennungsmotors sind im Stand der Technik verschiedene Möglichkeiten bekannt. Grundsätzlich sind elektrische und hydraulische Verstellsysteme bekannt. Bei den elektrisch angetriebenen Nockenwellenverstellsystemen gilt es, das relativ niedrige Drehmoment der elektrischen Verstelleinheit, beispielsweise eines Antriebsmotors oder einer Bremsvorrichtung, das bei hoher Drehzahl zur Verfügung steht, in eine Drehbewegung mit hohem Drehmoment zu wandeln; ein solches hohes Drehmoment ist für die Verstellung der Nockenwelle nötig. Hierfür ist es bekannt, Summiergetriebe als Verstellgetriebe einzusetzen. Ein solches Getriebe weist ein kurbelwellenfestes Antriebsrad auf. Der Abtrieb erfolgt über einen nockenwellenfesten Getriebeabgang. Die Differenzleistung des Getriebes, die zur Verstellung in die eine oder andere Drehrichtung eingekoppelt werden muss, wird über eine dritte Welle, die Verstellwelle, des Getriebes eingeleitet.

Ein elektrischer Nockenwellenversteller dieser Art ist aus der US 5 327 859 A, aus der WO 2005/080757 A1 und aus der DE 102 48 355 A1 bekannt. Offenbart ist eine Verstellvorrichtung zum elektrischen Verstellen der relativen Drehwinkellage zwischen der Nockenwelle und der Kurbelwelle, wobei ein Dreiwellengetriebe als Verstellgetriebe zum Einsatz kommt, das ein kurbelwellenfestes Antriebsteil, ein nockenwellenfestes Abtriebsteil und eine mit einer Verstellmotorwolle eines elektrischen Verstellmotors drehfest verbundenen Verstellwelle aufweist. Der Verstellmotor ist hier als bürstenloser Gleichstrommotor mit einem gehäusefesten Stator und einem Dauermagnetrotor ausgebildet. Als Verstellgetriebe kommt ein Doppelexzentergetriebe bzw. ein Doppelplanetengetriebe zum Einsatz, wobei hier eine Untersetzung bis zu 1:250 vorgesehen ist.

Die Relativverstellung der Nockenwelle zur Kurbelwelle wird auch in anderen Druckschriften beschrieben, wobei gleichermaßen Verstellgetriebe zum Einsatz kommen, die von einem Elektromotor betätigt werden können. Die EP 1 039 101 A2 setzt als Verstellgetriebe ein Harmonic-Drive-Getriebe ein. Dieses Getriebe arbeitet mit einer dünnen, elastisch verformbaren, verzahnten Hülse, wobei die Verzahnung der Hülse mit einem Hohlrad kämmt. Damit ist eine kompakte Bauart des Verstellgetriebes bei einem großen Untersetzungsverhältnis möglich.

Eine solche Lösung ist auch aus der DE 40 22 735 A1 bekannt, bei der ein solches Zykloid-Untersetzungsgetriebe zum Einsatz kommt. Eine ähnliche Bauart zeigt die WO 95/00748.

Die US 5,680,836 und die DE 102 03 621 A1 setzt ein Planetengetriebe als Verstellgetriebe ein, um die Relativdrehung zwischen Kurbel- und Nockenwelle zu erzeugen. Eine solche Lösung ist auch aus der DE 25 25 746 A1 bekannt.

Der Leistungsfluss soll dabei während der Verstellung mit einem hohen Wirkungsgrad erfolgen können, um den antreibenden Elektromotor oder die Bremsvorrichtung möglichst klein bauen zu können. Dabei soll eine möglichst geringe Verlustwärme entstehen. Weiterhin sollen die Verzahnungen des Verstellgetriebes möglichst spielfrei zueinander laufen. Ist dies nicht der Fall, entstehen während des Betriebs unerwünscht hohe Geräusche, deren Ursache primär in dem stark veränderlichen Wechseldrehmoment der Nockenwelle liegt. Gegebenenfalls im Verstellgetriebe auftretende Spiele werden entsprechend dem Übersetzungsverhältnis des Getriebes gewandelt. Zusätzlich ist es notwendig, den Bauraum für den Drehmomentwandler so klein wie möglich zu gestalten, da ein Trend zu immer kompakterer Bauweise des Verbrennungsmotors besteht. Ferner sind aus sicherheitstechnischen Gründen gewisse Abstände zwischen der Karosserie und dem Verbrennungsmotor einzuhalten, was gleichermaßen eine kompakte Motorbauart erfordert. Darüber hinaus muss das Verstellgetriebe möglichst kostengünstig realisiert werden können, damit die Systemkosten für den elektrischen Nockenwellenversteller, bestehend aus Verstellgetriebe, Elektromotor / Bremse und Ansteuerelektronik, gering gehalten werden können.

Bei den vorbekannten Lösungen gibt es diesbezüglich Einschränkungen, insbesondere, was die Laufruhe anbelangt. Rundlauffehler der zum Einsatz kommenden Verzahnungen sind nur mit hohem Aufwand gering zu halten, so dass beim Eingriff der Zahnräder und bei deren Rotation eine gewisse Geräuschentwicklung unvermeidlich ist. Je geringer der kostentreibende Fertigungsaufwand bei der Herstellung der zum Einsatz kommenden Zahnräder ist, desto größer wird das Problem der Geräuschentwicklung.

### Aufgabe der Erfindung

Der vorliegenden Erfindung liegt daher die **Aufgabe** zugrunde, einen Nockenwellenversteller der eingangs genannten Art so fortzubilden, dass eine höhere Laufruhe des Verstellgetriebes auch dann möglich ist, wenn Verzahnungs- bzw. Rundlauffehler vorliegen. Damit sollen die Herstellkosten gering gehalten werden können, ohne dass sich dies negativ auf das Laufverhalten des Verstellgetriebes auswirkt.

### Zusammenfassung der Erfindung

Die **Lösung** dieser Aufgabe durch die Erfindung ist dadurch gekennzeichnet, dass die Verstellwelle des Verstellgetriebes bezüglich der Verstelleinheitswelle radial schwimmend gelagert bzw. angeordnet ist, wobei zwischen der Verstellwelle und der Verstelleinheitswelle eine Kupplung angeordnet ist, die eine geringfügige relative radiale Verschiebung zwischen der Verstellwelle und der Verstelleinheitswelle zulässt.

Im Gegensatz zu den bekannten Lösungen wird also die Verstellwelle im eigentlichen Sinne gar nicht mehr gelagert, sie ist vielmehr radial in gewissen Grenzen frei verschiebbar und zentriert sich selber über den Zahneingriff der kämmenden Zahnräder.

Während die Verstelleinheitswelle im Elektromotor oder der Bremsvorrichtung, welche fest mit dem Verbrennungsmotor verbunden sind, radial gelagert ist, wird die radiale Lagerung aufgrund der radialen Flexibilität der Kupplung nicht auf die Verstellwelle übertragen; diese ist vielmehr relativ zur Verstelleinheitswelle radial beweglich.

Die Verstelleinheit kann als ein elektrischer Motor oder eine elektrische Bremsvorrichtung ausgebildet sein.

Als Kupplung kommt bevorzugt eine Elastomerkupplung oder eine Oldham-Kupplung zum Einsatz.

Das Verstellgetriebe ist nach einer Ausgestaltung als Doppelplanetengetriebe ausgebildet. Das Doppelplanetengetriebe kann zwei benachbart angeordnete Innenverzahnungen aufweisen, mit denen mindestens ein, zwei oder mehrere Stirnräder, vorzugsweise drei Stirnräder, gleichzeitig kämmt bzw. kämmen, wobei die Zähnezahl der beiden Innenverzahnungen unterschiedlich ist und wobei die Zähnezahldifferenz der Anzahl der Stirnräder oder einem Vielfachen davon entspricht.

Das mindestens eine Stirnrad kann in einem Planetenträger gelagert sein, wobei dieser insbesondere selber als Verstellwelle fungiert. Das mindestens eine Stirnrad kann mittels einer Wälzlagerung in dem Planetenträger gelagert sein; grundsätzlich kommt hierzu aber auch eine Gleitlagerung in Frage.

Gemäß einer alternativen Bauart kann auch vorgesehen sein, dass das mindestens eine zwei oder mehrere Stirnräder mit einem zentral angeordneten Sonnenrad kämmt, das mit der Verstellwelle verbunden ist (das so genannte Wolfromgetriebe).

Das Verstellgetriebe kann auch als Doppelexzentergetriebe oder Wellgetriebe ausgebildet sein.

Der Betrag der Untersetzung des Verstellgetriebes vorzugsweise zwischen 1:2 bis 1:250 liegt. Bei Einsatz eines Motors als elektrische Verstelleinheit weist dieser vorzugsweise hochinduktive Dauermagnetrotoren auf.

Durch die vorgeschlagene Lösung ergibt sich der Vorteil, dass sich die Verstellwelle des Verstellgetriebes bzw. dass sich die verstellwellengebundenen Teile des Getriebes - aufgrund der schwimmenden Lagerung - optimal zu den Zahnrädern zentriert bzw. zentrieren, mit denen sie kämmt bzw. kämmen. Die Verstellwellenteile können durch ihre radiale Beweglichkeit einen Teil des Verdrehflankenspiels, beispielsweise aufgrund von Rundlauffehlern, ausgleichen, was zu einem ruhigeren Lauf führt. Dadurch wird das Betriebsgeräusch reduziert, gleichermaßen die Gefahr von Klemmungen im Zahneingriff.

Von Vorteil ist weiterhin, dass die radiale Lagerung der Verstellwelle des Verstellgetriebes bzw. der verstellwellengebundenen Teile des Getriebes entfallen kann, was nicht nur die Reibung des Verstellgetriebes reduziert, sondern das Getriebe auch preiswerter macht. Durch die geringere Reibung lässt sich der Wirkungsgrad des Getriebes erhöhen.

Ebenfalls positiv zu vermerken ist, dass der benötigte Bauraum des Getriebes reduziert werden kann.

### Kurze Beschreibung der Figuren

In den Zeichnungen sind Ausführungsbeispiele der Erfindung dargestellt. Es zeigen:
- Fig. 1: eine schematische Darstellung eines Nockenwellenverstellers, der mit einem elektrisch angetriebenen Verstellgetriebe versehen ist,
- Fig. 2: eine teilweise geschnittene perspektivische Darstellung eines Nockenwellenverstellers, bei dem das Verstellgetriebe als Doppelplanetengetriebe ausgebildet ist,
- Fig. 3: eine teilweise geschnittene perspektivische Darstellung eines Nockenwellenverstellers, bei dem das Verstellgetriebe als Wolfromgetriebe ausgebildet ist, und
- Fig. 4: den Radialschnitt durch einen Nockenwellenversteller, bei dem das Verstellgetriebe als Wellgetriebe ausgebildet ist.

### Ausführliche Beschreibung der Figuren

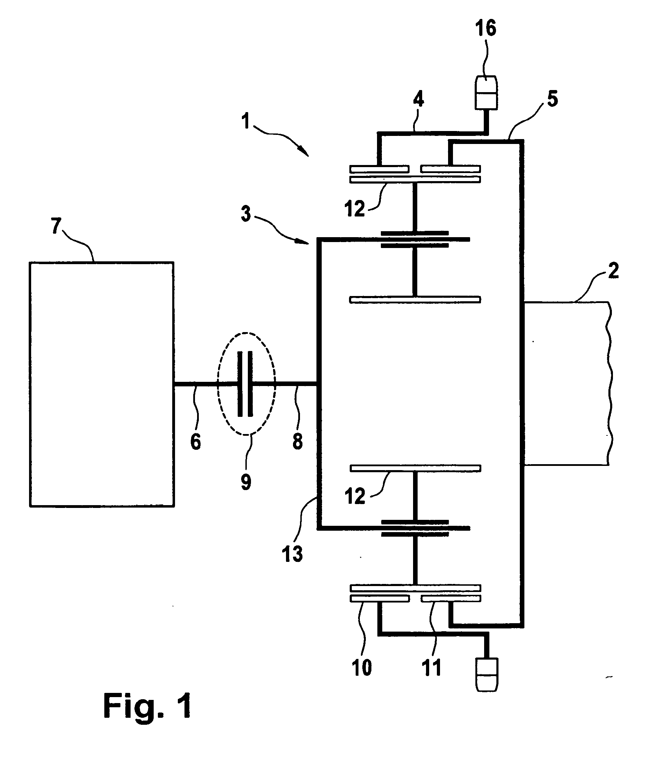

In Fig. 1 ist eine Prinzipskizze zu sehen, die den grundsätzlichen Aufbau eines Nockenwellenverstellers zeigt, der mit einem elektrisch angetriebenen Verstellgetriebe ausgestattet ist. Die Vorrichtung 1 zur Nockenwellenverstellung dient dazu, die Nockenwelle 2 eines Verbrennungsmotors relativ zu seiner Kurbelwelle zu verstellen, um die Ventilsteuerzeiten zu beeinflussen. Hierzu ist ein Verstellgetriebe 3 vorgesehen, das ein kurbelwellenfestes Antriebsteil 4 und ein nockenwellenfestes Abtriebsteil 5 aufweist. Schematisch ist angedeutet, dass das kurbelwellenfeste Antriebsteil 4 ein Kettenrad 16 hat, wobei eine nicht dargestellte Kette die feste Drehverbindung zur Kurbelwelle herstellt.

Das Verstellgetriebe 3 hat als Eingangswelle eine Verstellwelle 8, die über eine Kupplung 9 mit einer Verstelleinheitswelle 6 drehfest verbunden ist, wobei die Verstelleinheitswelle 6 Bestandteil einer elektrischen Verstelleinheit 7, beispielsweise eines Elektromotors oder einer Bremsvorrichtung, ist. Da das Verstellgetriebe 3 als Summiergetriebe gestaltet ist, hat eine Drehung der Verstellwelle 8 mittels der Verstelleinheit 7 zur Folge, dass eine Relativdrehung zwischen kurbelwellenfestem Antriebsteil 4 und nockenwellenfestem Abtriebsteil 5 bewerkstelligt wird, so dass die Nockenwellensteuerzeiten zwischen einen "Frühanschlag" und einem "Spätanschlag" verändert werden können.

Die Verstellwelle 8 ist mit einem Planetenträger 13 verbunden, über dessen Umfang eine Anzahl Stirnräder 12 mit einer Außenverzahnung angeordnet sind. Der Planetenträger 13 sorgt dafür, dass der benötigte Achsabstand zwischen den Stirnrädern eingehalten wird.

Das kurbelwellenfeste Antriebsteil 4 sowie das nockenwellenfeste Abtriebsteil 5 weisen je eine hohlradartig ausgebildete Verzahnungen 10 bzw. 11 auf, mit denen die Stirnräder 12 mit ihren Verzahnungen kämmen. Die beiden Innenverzahnungen 10, 11 haben dabei eine ungleiche Zähnezahl. Die Differenz der Zähne ist dabei die Anzahl der zum Einsatz kommenden Stirnräder 12 oder ein Vielfaches davon.

Kommen beispielsweise zwei Stirnräder 12 zum Einsatz, beträgt die Zahndifferenz zwischen den Verzahnungen 10 und 11 2, 4, 6, usw. Sind drei Stirnräder 12 vorgesehen, beträgt die Differenz der Zähne 3, 6, 9, usw.

Abhängig davon, welches Zahnrad 10, 11 die größere Zähnezahl aufweist, kann das Verstellgetriebe mit einem positiven oder einem negativen Untersetzungsverhältnis ausgeführt werden.

Wie zu sehen ist, sind die Stirnräder 12 so breit ausgebildet, dass sie gleichzeitig mit der Innenverzahnung 10 und der Innenverzahnung 11 kämmen.

Aufgrund der unterschiedlichen Zähnezahl zwischen den beiden Verzahnungen 10, 11 ergibt sich, dass bei Drehantrieb der Verstellwelle 8 und damit bei Rotation des Planetenträgers 13 eine Relativbewegung zwischen den beiden Verzahnungen 10 und 11 hervorgerufen wird, die eine starke Untersetzung aufweist. Typische Untersetzungen liegen bei 1:50 bis 1:200.

Erfindungswesentlich ist, dass der Planetenträger 13 selbst nicht zusätzlich radial gelagert wird, wie es bei den Lösungen gemäß dem Stand der Technik üblich ist. Er zentriert sich durch die Eingriffe der Verzahnungen der Stirnräder 12 und der Antriebs- bzw. Abtriebsteile 4, 5 selbsttätig, wobei er hinsichtlich der radialen Richtung schwimmend angeordnet ist. Damit können in verbesserter Weise Verzahnungsfehler ausgeglichen werden, was zu einem geräuschärmeren Lauf des Verstellgetriebes 3 führt.

Aufgrund der schwimmenden Bewegung des Planetenträgers 13 kann eine kleine Achsabweichung zwischen dem Planetenträger 13 und der Verstelleinheitswelle 6 entstehen. Aus diesem Grunde ist die Kupplung 9 als radial flexible Kupplung ausgelegt. Sie erlaubt eine geringfügige radiale Bewegung zwischen den beiden Wellenteilen 6 und 8. Die Kupplung 9 sorgt also dafür, dass kleine Abweichungen der Verstellwelle 8 in radialer Richtung ausgeglichen werden, während sie gleichzeitig das Verstelldrehmoment überträgt. Beispiele solcher Kupplungen sind Elastomerkupplungen oder Oldham-Kupplungen, die als solche hinlänglich bekannt sind.

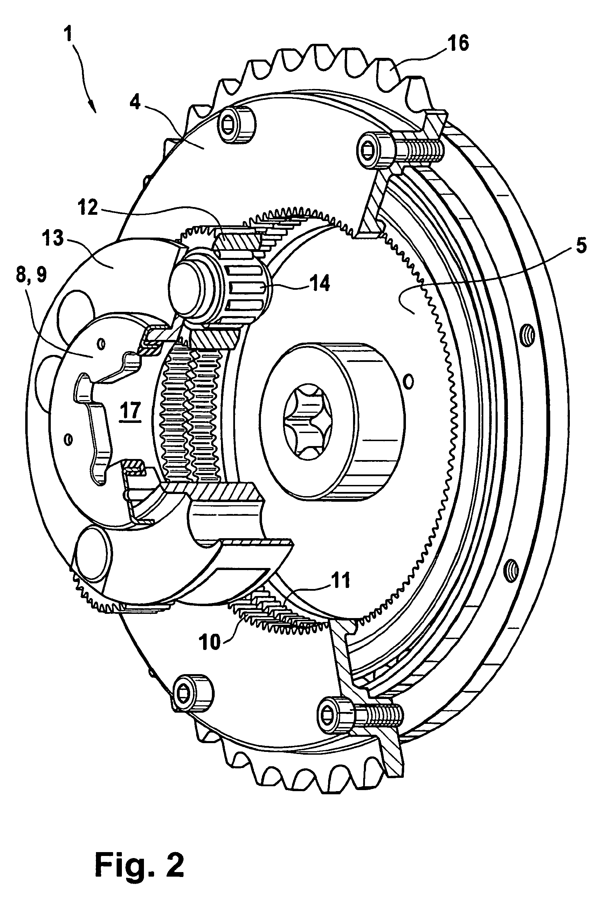

Fig. 2 zeigt eine Ausführungsform der Erfindung, bei der ein Doppelplanetengetriebe als Verstellgetriebe zum Einsatz kommt. Die Lagerung der Stirnräder 12 im Planetenträger 13 kann als Wälz- oder Gleitlagerung ausgebildet sein. Im Ausführungsbeispiel kommen Wälzlagerungen 14 zum Einsatz, was eine niedrige Reibung zur Folge hat.

Zur Reibungsminimierung hat der Planetenträger 13 keine axialen Anlageflächen, sondern die gesamte Planetenträgereinheit wird über die Seitenwände der Stirnräder axial geführt. Dadurch wird vermieden, dass Reibung aufgrund der axialen Anlage direkt auf den Planetenträger 13 und somit auf die elektrische Verstelleinheit 7 wirkt, was eine Verschlechterung des Wirkungsgrades zur Folge hätte.

Zu erwähnen ist bei der Lösung gemäß Fig. 2 noch, dass die Verstellwelle 8 hier als ein Teil zusammen mit einem Abschnitt der Kupplung 9 ausgebildet ist bzw. fungiert. Die Kupplung 9 ist als Elastomerkupplung ausgebildet. In die in Fig. 2 dargestellte Ausnehmung 17 greift ein nicht dargestelltes Kupplungsteil ein, das mit der (nicht dargestellten) Verstelleinheitswelle verbunden ist. Die Kupplung 9 erlaubt eine geringfügige radiale Bewegung zwischen der Verstelleinheitswelle und dem mit der Bezugsziffer 8 versehenen Teil der Kupplung. Damit ist der Planetenträger 13 radial schwimmend angeordnet.

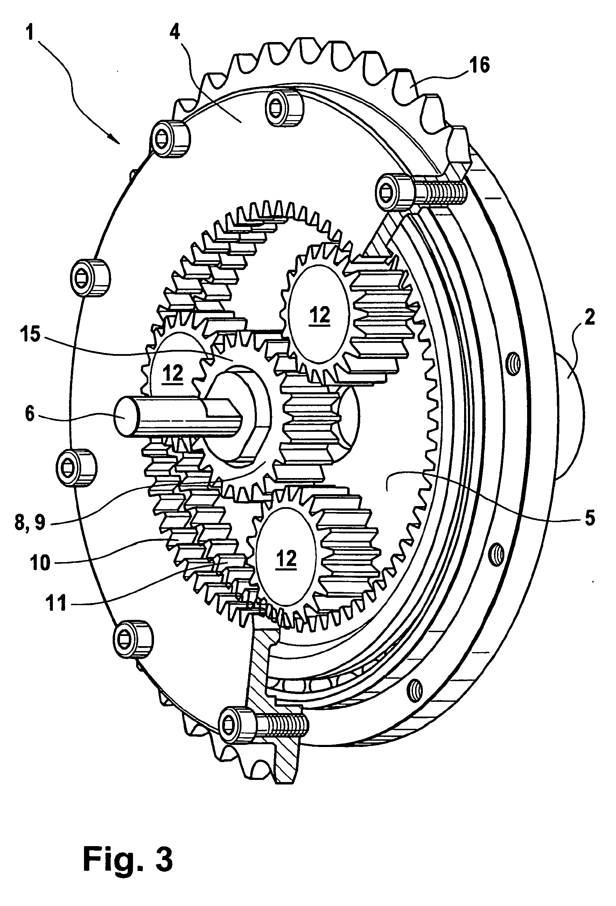

Gemäß der Ausgestaltung nach Fig. 3 ist vorgesehen, dass das Verstellgetriebe als Wolfromgetriebe ausgeführt ist, d. h. als ein der Gattung der Planetengetriebe zuzurechnendes Getriebe. Das Verstellgetriebe weist zwei zueinander gelagerte Hohlräder mit den Innenverzahnungen 10 und 11 auf, die wieder mit der Kurbelwelle bzw. mit der Nockenwelle verbunden sind. Weiterhin besteht wieder gleichzeitiger Zahneingriff mit mehreren Stirnrädern 12. Wie beim Doppelplanetengetriebe muss auch hier wieder der Unterschied der Zähnezahl zwischen den Verzahnungen 10 und 11 so groß sein wie die Anzahl der Stirnräder 12 bzw. einem Vielfachen davon. Die Verstellung des Verstellgetriebes erfolgt hier mit einem Sonnenrad 15, das mit allen Stirnrädern 12 im Eingriff ist und das wieder radial schwimmend angeordnet ist. Der Unterschied zu einem als solchen vorbekannten Wolfromgetriebe besteht also darin, dass das Sonnenrad 15 und die Stirnräder 12 (Planetenräder) nur über die Zahneingriffe radial positioniert werden.

Als Kupplung 9 ist hier eine als solche hinlänglich bekannte Oldham-Kupplung vorgesehen. Es ist wieder anzumerken, dass auch hier die Verstellwelle 8 als ein Teil zusammen mit einem Abschnitt der Kupplung 9 ausgebildet ist bzw. fungiert. Auch die Oldham-Kupplung 9 erlaubt eine geringfügige radiale Bewegung zwischen der Verstelleinheitswelle und dem mit der Bezugsziffer 8 versehenen Teil der Kupplung.

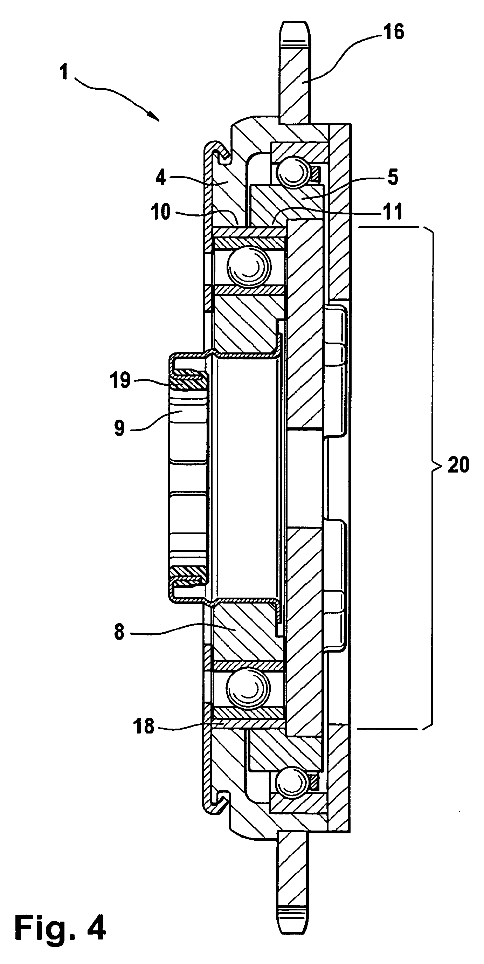

Wie Fig. 4 zeigt, kann statt eines Planetengetriebes auch beispielsweise ein Wellgetriebe als Verstellgetriebe 3 zum Einsatz kommen. Das Wellgetriebe arbeitet und das Harmonic-Drive-Getriebes, das als solches hinlänglich bekannt ist, arbeiten nach dem gleichen Prinzip.

Das nockenwellenfeste Abtriebsteil 5 weist eine Innenverzahnung 11 auf, während das kurbelwellenfeste Antriebsteil 4 die Innenverzahnung 10 hat. Beide Verzahnungen 10, 11 stehen mit einer außenverzahnten dünnwandigen Hülse 18 im Eingriff. Die hier elliptisch ausgeformte Verstellwelle 8 führt zum Eingriff der Verzahnungen 10 bzw. 11 mit der Außenverzahnung der Hülse 18 an zwei sich gegenüberliegenden Umfangsstellen der Hülse 18. Bei Drehung der Verstellwelle 8 mittels der Verstelleinheitswelle (nicht dargestellt) kommt es daher zu dem Untersetzungseffekt des Wellgetriebes.

Die Verstellwelle 8 ist mit einer Kupplung 9 verbunden, die vorliegend durch den Einsatz von Elastomermaterial 19 die erfindungsgemäße schwimmende Anordnung der Verstellwelle 8 bewirkt. Der in Fig. 4 mit dem Bezugszeichen 20 markierte radiale Bereich der Verstellwelle 8 samt angrenzender Bauteile ist daher schwimmend angeordnet, d. h. die Zentrierung erfolgt ohne Radiallagerung ausschließlich durch die Zahneingriffe.

Grundsätzlich können beliebige Arten von Verstellgetrieben 3 zum Einsatz kommen, um das Erfindungskonzept zu realisieren. Erwähnt seien beispielsweise an sich bekannte Taumelscheibengetriebe oder das ungleichförmig übersetzende Schubkurbelgetriebe.

### Bezugszeichenliste:

- 1: Vorrichtung zur Nockenwellenverstellung
- 2: Nockenwelle
- 3: Verstellgetriebe
- 4: kurbelwellenfestes Antriebsteil
- 5: nockenwellenfestes Abtriebsteil
- 6: Verstelleinheitswelle
- 7: elektrische Verstelleinheit
- 8: Verstellwelle
- 9: Kupplung
- 10: Innenverzahnung
- 11: Innenverzahnung
- 12: Stirnrad
- 13: Planetenträger
- 14: Wälzlagerung
- 15: Sonnenrad
- 16: Kettenrad
- 17: Ausnehmung
- 18: Hülse
- 19: Elastomermaterial
- 20: radialer Bereich

## Patentansprüche

1. Vorrichtung (1) zur elektrischen Verstellung der relativen Drehwinkellage zwischen einer Nockenwelle (2) und einer Kurbelwelle einer Brennkraftmaschine, mit einem Verstellgetriebe (3), das ein kurbelwellenfestes Antriebsteil (4), ein nockenwellenfestes Abtriebsteil (5) und eine mit einer Verstelleinheitswelle (6) einer elektrischen Verstelleinheit (7) drehfest verbundene Verstellwelle (8) aufweist,
**dadurch gekennzeichnet,**
**dass** die Verstellwelle (8) bezüglich der Verstelleinheitswelle (6) radial schwimmend angeordnet ist, wobei zwischen der Verstellwelle (8) und der Verstelleinheitswelle (6) eine Kupplung (9) angeordnet ist, die eine geringfügige relative radiale Verschiebung zwischen der Verstellwelle (8) und der Verstelleinheitswelle (6) zulässt.

2. Vorrichtung nach Anspruch 1, **dadurch gekennzeichnet**, die Verstelleinheit 7 als ein elektrischer Motor oder eine elektrische Bremsvorrichtung ausgebildet ist.

3. Vorrichtung nach Anspruch 1, **dadurch gekennzeichnet, dass** die Kupplung (9) als Elastomerkupplung ausgebildet ist.

4. Vorrichtung nach Anspruch 1, **dadurch gekennzeichnet, dass** die Kupplung (9) als Oldham-Kupplung ausgebildet ist.

5. Vorrichtung nach Anspruch 1, **dadurch gekennzeichnet, dass** das Verstellgetriebe (3) als Doppelplanetengetriebe ausgebildet ist.

6. Vorrichtung nach Anspruch 5, **dadurch gekennzeichnet, dass** das Doppelplanetengetriebe (3) zwei benachbart angeordnete Innenverzahnungen (10, 11) aufweist, mit denen mindestens ein Stirnrad (12) gleichzeitig kämmt, wobei die Zähnezahl der beiden Innenverzahnungen (10, 11) unterschiedlich ist und wobei die Zähnezahldifferenz der Anzahl der Stirnräder (12) oder einem Vielfachen davon entspricht.

7. Vorrichtung nach Anspruch 6, **dadurch gekennzeichnet, dass** das mindestens eine Stirnrad (12) in einem Planetenträger (13) gelagert ist.

8. Vorrichtung nach Anspruch 7, **dadurch gekennzeichnet, dass** der Planetenträger (13) als Verstellwelle (8) fungiert.

9. Vorrichtung nach Anspruch 7, **dadurch gekennzeichnet, dass** das mindestens eine Stirnrad (12) mittels einer Wälzlagerung (14) in dem Planetenträger (13) gelagert ist.

10. Vorrichtung nach Anspruch 6, **dadurch gekennzeichnet, dass** das mindestens eine Stirnrad (12) mit einem zentral angeordneten Sonnenrad (15) kämmt, das mit der Verstellwelle (8) verbunden ist oder als Verstellwelle (8) fungiert.

11. Vorrichtung nach Anspruch 1, **dadurch gekennzeichnet, dass** das Verstellgetriebe (3) als Doppelexzentergetriebe ausgebildet ist.

12. Vorrichtung nach Anspruch 1, **dadurch gekennzeichnet, dass** das Verstellgetriebe (3) als Wellgetriebe ausgebildet ist.

13. Vorrichtung nach Anspruch 1, **dadurch gekennzeichnet, dass** der Betrag der Untersetzung des Verstellgetriebes (3) zwischen 1:2 bis 1:250 liegt.

14. Vorrichtung nach Anspruch 2, **dadurch gekennzeichnet, dass** die elektrische Verstelleinheit (7) als Motor ausgebildet ist, der hochinduktive Dauermagnetrotoren aufweist.

## Claims

1. Device (1) for electrically adjusting the relative rotational angle position between a camshaft (2) and a crankshaft of an internal combustion engine, having an adjusting gearing (3) which has a drive input part (4) fixed to the crankshaft, a drive output part (5) fixed to the camshaft, and an adjusting shaft (8) connected in a rotationally conjoint manner to an adjusting unit shaft (6) of an electric adjusting unit (7),
**characterized**
**in that** the adjusting shaft (8) is arranged in a radially floating manner with respect to the adjusting unit shaft (6), wherein between the adjusting shaft (8) and the adjusting unit shaft (6) there is arranged a coupling (9) which permits a slight relative radial displacement between the adjusting shaft (8) and the adjusting unit shaft (6).

2. Device according to Claim 1, **characterized in that** the adjusting unit (7) is in the form of an electric motor or an electric brake device.

3. Device according to Claim 1, **characterized in that** the coupling (9) is in the form of an elastomer coupling.

4. Device according to Claim 1, **characterized in that** the coupling (9) is in the form of an Oldham coupling.

5. Device according to Claim 1, **characterized in that** the adjusting gearing (3) is in the form of a double planetary gear set.

6. Device according to Claim 5, **characterized in that** the double planetary gear set (3) has two adjacently arranged internal toothings (10, 11) with which at least one spur gear (12) meshes simultaneously, wherein the numbers of teeth of the two internal toothings (10, 11) are different, and wherein the difference in the numbers of teeth corresponds to the number of spur gears (12) or to a multiple thereof.

7. Device according to Claim 6, **characterized in that** the at least one spur gear (12) is mounted in a planet carrier (13).

8. Device according to Claim 7, **characterized in that** the planet carrier (13) functions as an adjusting shaft (8).

9. Device according to Claim 7, **characterized in that** the at least one spur gear (12) is mounted in the planet carrier (13) by means of a rolling bearing (14).

10. Device according to Claim 6, **characterized in that** the at least one spur gear (12) meshes with a centrally arranged sun gear (15) which is connected to the adjusting shaft (8) or which functions as an adjusting shaft (8).

11. Device according to Claim 1, **characterized in that** the adjusting gearing (3) is in the form of a double eccentric gearing.

12. Device according to Claim 1, **characterized in that** the adjusting gearing (3) is in the form of a harmonic drive.

13. Device according to Claim 1, **characterized in that** the step-down ratio of the adjusting gearing (3) is between 1:2 and 1:250.

14. Device according to Claim 2, **characterized in that** the electric adjusting unit (7) is in the form of a motor which has high-induction permanent magnet rotors.

## Revendications

1. Dispositif (1) de réglage électrique de la position relative de l'angle de rotation entre un arbre à cames (2) et un vilebrequin d'un moteur à combustion interne, comprenant un mécanisme de réglage (3) qui présente une partie d'entraînement (4) fixée au vilebrequin, une partie de sortie (5) fixée à l'arbre à cames, et un arbre de réglage (8) connecté de manière solidaire en rotation à un arbre d'unité de réglage (6) d'une unité de réglage électrique (7),
**caractérisé en ce que**
l'arbre de réglage (8) est disposé de manière flottante radialement par rapport à l'arbre d'unité de réglage (6), un embrayage (9) étant disposé entre l'arbre de réglage (8) et l'arbre d'unité de réglage (6), lequel embrayage permet un léger déplacement radial relatif entre l'arbre de réglage (8) et l'arbre d'unité de réglage (6).

2. Dispositif selon la revendication 1, **caractérisé en ce que** l'unité de réglage (7) est réalisée sous forme de moteur électrique ou de dispositif de frein électrique.

3. Dispositif selon la revendication 1, **caractérisé en ce que** l'embrayage (9) est réalisé sous forme d'embrayage en élastomère.

4. Dispositif selon la revendication 1, **caractérisé en ce que** l'embrayage (9) est réalisé sous forme d'embrayage de type Oldham.

5. Dispositif selon la revendication 1, **caractérisé en ce que** le mécanisme de réglage (3) est réalisé sous forme de mécanisme planétaire double.

6. Dispositif selon la revendication 5, **caractérisé en ce que** le mécanisme planétaire double (3) présente deux dentures internes (10, 11) disposées l'une à côté de l'autre, avec lesquelles s'engrène simultanément au moins un pignon droit (12), le nombre de dents des deux dentures internes (10, 11) étant différent et la différence entre le nombre de dents correspondant au nombre des pignons droits (12) ou à un multiple de celui-ci.

7. Dispositif selon la revendication 6, **caractérisé en ce que** l'au moins un pignon droit (12) est supporté dans un porte-planétaire (13).

8. Dispositif selon la revendication 7, **caractérisé en ce que** le porte-planétaire (13) sert d'arbre de réglage (8).

9. Dispositif selon la revendication 7, **caractérisé en ce que** l'au moins un pignon droit (12) est supporté au moyen d'un palier à roulement (14) dans le porte-planétaire (13).

10. Dispositif selon la revendication 6, **caractérisé en ce que** l'au moins un pignon droit (12) s'engrène avec une roue solaire (15) disposée centralement, qui est connectée à l'arbre de réglage (8) ou qui sert d'arbre de réglage (8).

11. Dispositif selon la revendication 1, **caractérisé en ce que** le mécanisme de réglage (3) est réalisé sous forme de mécanisme excentrique double.

12. Dispositif selon la revendication 1, **caractérisé en ce que** le mécanisme de réglage (3) est réalisé sous forme de transmission harmonique.

13. Dispositif selon la revendication 1, **caractérisé en ce que** la valeur de la démultiplication du mécanisme de réglage (3) est comprise entre 1:2 et 1:250.

14. Dispositif selon la revendication 2, **caractérisé en ce que** l'unité de réglage électrique (7) est réalisée sous forme de moteur, qui présente des rotors à aimants permanents à haute induction.
